# FASCICULE DE BREVET EUROPEEN

(11) **EP 2 388 948 B1**
(45) Date de publication et mention de la délivrance du brevet: **05.07.2017**
(21) Numéro de dépôt: 11166552.7
(22) Date de dépôt: 18.05.2011
(51) Int. Cl.: G06F 21/73, G06F 21/77, H04L 9/08, H04L 9/32

(54) **Procédé et système d'accès à un circuit intégré comprenant une clé personnelle d'authentification**
VERFAHREN UND SYSTEM ZUM ZUGRIFF AUF EINEN EINEN PERSÖNLICHEN AUTHENTIFIZIERUNGSSCHLÜSSEL BEINHALTENDEN INTEGRIERTEN SCHALTKREIS
METHOD AND SYSTEM FOR ACCESS TO AN INTEGRATED CIRCUIT COMPRISING A PERSONAL AUTHENTICATION KEY

(30) Priorité: 20.05.2010 FR 1053924
(43) Date de publication de la demande: 23.11.2011
(73) Titulaire: Oberthur Technologies, 92700 Colombes (FR)
(72) Inventeur: Collier, Benoît, 92300 Levallois-Perret (FR); Simi Djomo, Rodrigues, 92300 Levallois-Perret (FR)
(74) Mandataire: Santarelli

(56) Documents cités:
- WO-A1-2009/102247
- WO-A2-2007/087432
- FR-A1- 2 882 208
- US-A1- 2007 095 927

## Description

La présente invention concerne le domaine des circuits intégrés électroniques et plus particulièrement un procédé et un système d'accès à tels circuits intégrés.

Les circuits intégrés électroniques sont, de nos jours, mis en oeuvre dans de nombreux dispositifs électroniques. On connaît notamment les circuits intégrés formant puce électronique de carte à puce, cartes mémoire, clé USB, etc.

La fabrication d'un circuit intégré s'effectue généralement dans un premier site ou unité de fabrication (généralement une usine) où le circuit est élaboré sur une tranche de silicium (ou *wafer*). Puis lorsque celui-ci doit être personnalisé ou pré-personnalisé, cette opération est réalisée dans un deuxième site ou unité de personnalisation (ou plusieurs autres sites) où le circuit intégré ainsi élaboré est (pré)personnalisé par des données numériques eu égard aux fonctions qu'il devra remplir.

Dans la suite de ce document, le terme *"personnalisation"* sera généralement compris comme étant celui utilisé couramment par l'homme du métier dans l'industrie des cartes à microcircuit, ou tel que défini par W. Rankl et W. Effing dans le document "Smart Card Handbook, Second Edition, Ed. John Wiley & Sons, Ltd" de la façon suivante : "Le terme personnalisation, dans son sens le plus large, signifie que les données spécifiques à une carte ou à une personne sont entrées dans la carte. Ces données peuvent par exemple être un nom, une adresse, mais aussi des clefs associées à la carte. La seule chose qui importe est que ces données soient spécifiques à cette carte*."*

Par extension, la pré-personnalisation des circuits intégrés consiste à des opérations similaires sauf que les données entrées dans ces circuits intégrés sont communes à un lot ou à un type d'entité (par exemple les cartes à puces). Il s'agit par exemple de données de configuration de programmes contenus dans une mémoire morte ROM qui visent à déterminer un comportement ou un fonctionnement commun à tous ces circuits intégrés du même lot ou du même type d'entité.

Pour des raisons sécuritaires, les circuits intégrés, lorsqu'ils sortent des sites de fabrication, doivent contenir une clé dite de transport propre à chaque circuit intégré, afin de prévenir tout accès non souhaité aux mémoires, généralement EEPROM *("Electrically-Erasable Programmable Read-Only Memory"* ou mémoire morte effaçable électriquement et programmable), qu'ils contiennent. Cette clé de transport est alors utilisée lors d'un contrôle d'authentification préalable à la pré-personnalisation ou personnalisation du circuit intégré avec accès à ces mémoires. Cette clé de transport peut ainsi être vue comme étant un clé d'authentification.

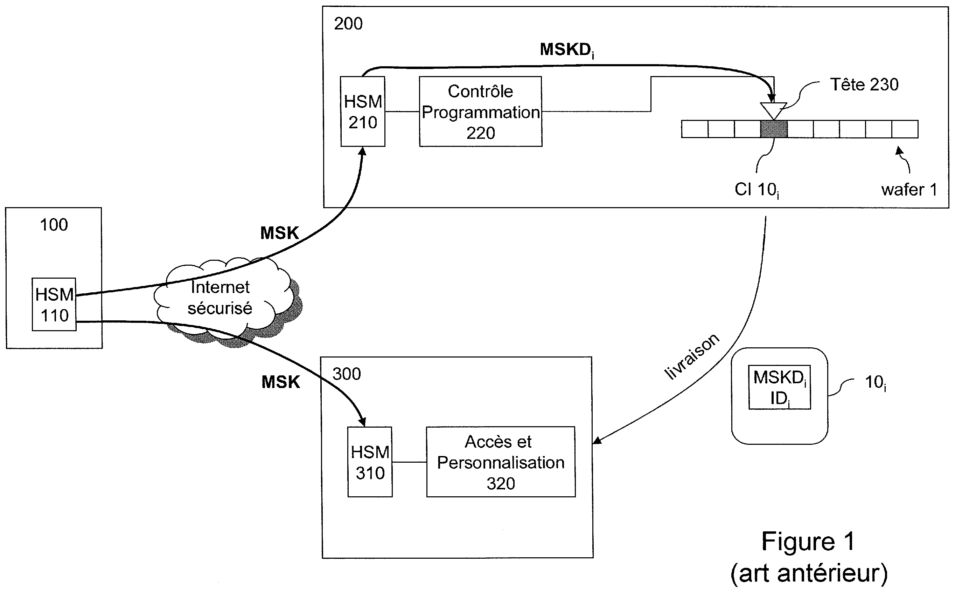

La **figure 1** montre les différents intervenants dans un processus de production d'une carte à puce électronique à partir d'un circuit intégré.

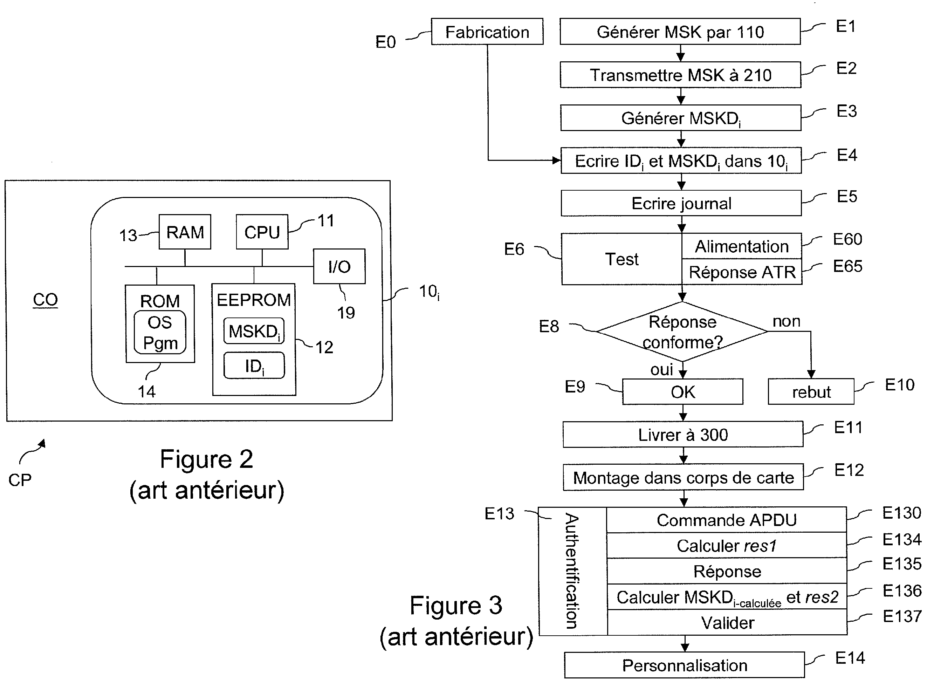

Comme représenté schématiquement par la **figure 2**, une carte à puce CP comprend généralement un corps de carte CO en matière plastique recevant un module construit à partir d'un circuit intégré CI 10. Ce dernier comporte un processeur ou microcontrôleur 11, ainsi qu'une mémoire non volatile réinscriptible 12, une mémoire volatile type RAM 13, une mémoire non volatile non réinscriptible ROM 14 et une interface de communication 19 permettant d'échanger des données entre le processeur et l'extérieur de la carte à puce et également d'alimenter électriquement la carte à puce, par exemple des contacts électriques selon la norme ISO/IEC 7816 ou une interface sans contact conforme à la norme ISO/IEC 14443.

Les mémoires et l'interface de communication sont gérées et accessibles par le microcontrôleur (en lecture et/ou en écriture selon le cas).

De retour à la **figure 1**, un donneur d'ordre 100, par exemple un fabricant de carte à puce, fait appel à un fabricant 200 (ou fondeur) de circuits intégrés et à une société 300 de (pré)personnalisation de circuits intégrés selon les fonctionnalités souhaitées dans la carte à puce.

Le site de fabrication 200 est un environnement hautement sécurisé, d'un point de vue physique comme informatique, afin de garantir une fabrication intègre de circuits intégrés 10 à partir de tranches de silicium 1 ou *wafers.*

Au niveau du donneur d'ordre, un module de sécurité matérielle HSM *("Hardware Security Module")* 110 pour circuits intégrés est prévu pour générer des clés secrètes de fabricant MSK *("Manufacturer Secret Key"),* ci-après dénommées clés racines ou maîtres *(root keys).* Ces clés racines peuvent alors être transmises aux sites de fabrication 200 et de (pré)personnalisation 300 par un accès sécurisé, par exemple via l'Internet sécurisé.

Au niveau du fondeur 200, un module de sécurité matérielle HSM 210 est également présent pour recevoir ces clés racines MSK et les communiquer de façon sécurisée au reste de la chaîne de fabrication.

Cette dernière comprend un module de contrôle et de programmation 220 des circuits intégrés et une tête de programmation 230 des circuits intégrés 10. Comme on le verra par la suite, cette tête de programmation 230 comprend également des moyens d'alimentation (non représentés) des circuits intégrés 10 lors d'un test initial.

Bien entendu les opérations de fabrication et de (pré)personnalisation peuvent être menées par une même entreprise, les unités de fabrication et de (pré)personnalisation pouvant être dans une même usine mais dans deux zones opérationnelles distinctes.

Pour la suite de la description, on décrira principalement la personnalisation des circuits intégrés 10. L'invention s'applique toutefois à d'autres opérations, par exemple celles de pré-personnalisation.

La **figure 3** illustre des étapes classiques de production d'une carte à puce CP.

Lors d'une étape initiale E0, le fondeur 200 conduit la fabrication matérielle de circuits intégrés 10, et donc des différents composants énumérés précédemment en lien avec la **figure 2**. En particulier, le dessin des différentes couche du circuit intégré élabore la mémoire non volatile non réinscriptible (ROM) 14 pour qu'elle comprenne des données représentatives d'instructions de programmes de base pour le fonctionnement du circuit intégré, par exemple d'un programme d'amorçage (*boot*) et d'un système d'exploitation OS apte à traiter des commandes APDU (*"Application Protocol Data Unit"* en anglais) comme évoquées par la suite.

Lors d'une première étape E1, chez le fabricant de cartes à puce 100, une clé MSK est générée, par exemple sur 8 ou 16 octets, par le module HSM 110.

Cette clé MSK est transmise au fondeur 200 et au site de personnalisation 300, et plus précisément aux modules HSM 210 et 310, via l'Internet sécurisé, lors d'une étape E2.

Au niveau du site de fabrication 200, les circuits intégrés électroniques 10 ont été élaborés sur des *wafers* 1 (étape E0). Chaque wafer appartient à un lot de wafers numéroté IDₗₒₜ et comprend un numéro d'identification ID_{wafer}. Chaque circuit intégré réalisé sur un wafer peut par ailleurs être identifiée par sa position (X_{circuit}, Y_{circuit}) sur un wafer ou comprendre un numéro de circuit ID_{circuit} dans le lot ou sur le wafer.

A l'étape E3, le module HSM 210 qui a reçu la clé MSK génère, pour chaque circuit intégré réalisé 10ᵢ, une clé personnelle de transport ou d'authentification MSKDᵢ par diversification de la clé MSK reçue, à partir d'une donnée unique d'identification ou numéro de série unique IDᵢ de chaque circuit électronique 10ᵢ.

La notion de diversification est largement connue de l'homme de l'art et ne sera pas décrite plus en détail. A titre d'illustration seulement, la clé personnelle de transport ou d'authentification MSKDᵢ peut être générée en appliquant une opération d'encryptage de la donnée unique d'identification IDᵢ avec la clé racine MSK, à l'aide d'un algorithme symétrique, par exemple MSKDᵢ=AES(IDᵢ, MSK).

Une fois qu'un wafer 1 de circuits intégrés 10ᵢ a été élaboré, le module de programmation 220 commande, à l'étape E4, la tête 230 pour écrire, dans la mémoire non volatile réinscriptible 12, par exemple type EEPROM, de chaque circuit intégré 10ᵢ:
- la donnée unique d'identification IDᵢ du circuit intégré, qui peut par exemple comprendre tout ou partie du type de circuit intégré, d'un identifiant du site de fabrication IDₛᵢₜₑ, et des identifiants IDₗₒₜ, ID_{wafer} et ID_{circuit} (ou X_{circuit}, Y_{circuit});
- la clé de transport/d'authentification MSKDᵢ propre à ce circuit intégré 10ᵢ et générée lors de l'étape E3.

La **figure 2** illustre l'état du circuit intégré après cette étape.

Ainsi, la tête de programmation 230 comporte des moyens d'accès direct à la zone mémoire 12 pour écrire ces diverses données, par exemple par contact direct sur les bornes physiques de la mémoire. On entend ici par "accès direct" le fait que l'accès n'est réalisé ni au travers du processeur du circuit intégré ni au travers de l'interface normale de communication du circuit intégré (généralement les contacts électriques selon la norme ISO/IEC 7816).

Cet accès direct s'avère utile dès lors que le système d'exploitation du processeur 11 comprend des moyens de détection d'anomalies ou d'attaques relatives à des clés secrètes, ce qui est généralement le cas. En effet, dans ce cas, si le processeur est mis sous tension avant que sa clé de transport ou d'authentification MSKDᵢ soit mémorisée en mémoire non volatile, une anomalie/attaque est immédiatement détectée en raison de l'absence de la clé, et cette détection conduit à mettre le circuit intégré hors service, alors que ce n'est pas le cas.

A noter que c'est le module de programmation 220 qui, lorsqu'il souhaite effectuer les opérations de l'étape E4, commande le module HSM 210 pour effectuer la génération de l'étape E3.

Puis à l'étape E5, le fondeur 200 mémorise, dans un journal (fichier numérique ou *"log"),* l'ensemble des clés MSKDᵢ utilisées et les données uniques d'identification IDᵢ des circuits associés. Ce journal est notamment mémorisé de façon cryptée au niveau du module de programmation 220 ou, en variante, dans le module HSM 210.

Ce journal permet notamment, en cas de problème au moment de la (pré)personnalisation des circuits intégrés, de garder trace des clés de transport ou d'authentification MSKDi qui ont été déchargées pour débogage ou pour éviter éventuellement d'avoir à rejeter les circuits si on ne retrouve plus la clé MSKDᵢ lors de la personnalisation.

A l'issue de cette étape, la programmation des circuits intégrés 10 a été réalisée. Il est toutefois connu de procéder à un test d'alimentation E6 afin de vérifier le bon fonctionnement électrique de chaque circuit.

Ce test comprend l'étape E60 au cours de laquelle un module de contrôle avec une tête d'alimentation (ce peut être le même module que le module de programmation 220 muni de sa tête 230) se connecte aux contacts électriques externes normaux de l'interface de communication et met le circuit intégré 10ᵢ sous tension en lui appliquant un premier signal analogique d'alimentation électrique.

Selon la norme ISO/IEC 7816, le circuit 10ᵢ répond alors, à la mise sous tension, par un message ATR *("Answer To Reset")* à l'étape E65. Dans le cadre de la norme ISO/IEC 14443 (cartes sans contact), cette réponse prend la forme d'un message ATS *("Answer To Select"*).

Si le circuit intégré renvoie un message ATR conforme à la norme ISO 7816 et que son contenu est correct, c'est-à-dire celui attendu par le module de contrôle (test E8), alors ce circuit intégré 10ᵢ est considéré comme conforme (étape E9).

Autrement (par exemple si aucune réponse n'est reçue dans un délai généralement de l'ordre de 10 à 20 millisecondes), le circuit intégré est considéré comme défaillant et mis au rebut (étape E10). A cette occasion, le circuit intégré peut être marqué comme défaillant (en mémoire par le module de contrôle ou une inscription équivalente dans le journal prévu à l'étape E5).

Après ce test, les circuits intégrés 10ᵢ quittent le site de fabrication avec, en mémoire, une donnée unique d'identification IDᵢ et une clé de transport/d'authentification MSKDᵢ propres à chaque circuit intégré. Ceux-ci sont alors livrés au site de personnalisation 300 (étape E11), soit sous forme de wafer entier, soit déjà individualisés par découpage du wafer 1.

A l'étape E12, les circuits intégrés reçus sont, si nécessaire, découpés du wafer reçu, puis par exemple montés sur une vignette pour former un module de carte à puce, et enfin insérés dans un corps de carte CO conforme à la norme ISO 7816 de sorte à créer une carte à puce.

Bien entendu, un même procédé est mis en oeuvre pour la production de cartes sans contact ("*contactless"* ou "*eCover*" - nom commercial) en montant les circuits intégrés sur des modules de cartes sans contact, ou pour la production d'autres entités portables ou de poche, telles que les cartes mémoires (SD ou Flash) ou les clés USB, en sélectionnant le corps de l'entité devant recevoir le circuit intégré.

Survient ensuite la personnalisation de la carte à puce et donc du circuit intégré qu'elle contient, par un module/dispositif de personnalisation 320, pour répondre aux fonctions attendues.

Cette personnalisation comprend, à l'étape E13, une authentification entre la carte à puce CP et un dispositif d'accès et de personnalisation 310/320 disposant de la clé racine MSK.

Cette authentification a pour objectif d'autoriser ou non l'écriture des données dans la mémoire non volatile, type EEPROM, du circuit intégré 10ᵢ.

Elle est notamment réalisée par communication avec le circuit intégré 10ᵢ au travers de l'interface de communication 14, par exemple au travers des contacts électriques selon la norme ISO 7816.

A titre d'illustration non limitative, une authentification par algorithme challenge-réponse peut être mise en oeuvre pour authentifier la carte CP par le dispositif d'accès ou de personnalisation. Une authentification similaire du dispositif d'accès ou de personnalisation par la carte CP est également prévue pour obtenir une authentification mutuelle des deux entités.

L'authentification de la carte CP par le dispositif d'accès ou de personnalisation peut comprendre :
- l'envoi d'une première commande numérique d'authentification de type commande APDU, par le dispositif d'accès ou de personnalisation auprès de la carte à personnaliser, communiquant un challenge c (typiquement un nombre aléatoire) de taille adéquate au circuit intégré 10ᵢ (étape E130). A ce stade, cette commande APDU constitue le tout premier signal numérique que reçoit généralement la carte à puce fabriquée;
- le calcul, par le circuit intégré 10ᵢ de la carte, d'une réponse *res1* correspondant à un encryptage du challenge c par sa clé de transport ou d'authentification MSKDᵢ propre (par exemple par application d'un algorithme symétrique DES ou AES) (étape E134);

- l'envoi de la réponse *res1,* accompagnée de la donnée unique d'identification IDᵢ, de la carte au dispositif d'accès ou de personnalisation (étape E135);
- la calcul, par le dispositif d'accès ou de personnalisation, de la réponse *res2* censée être reçue par celui-ci,
   ▪ en dérivant tout d'abord la clé racine MSK détenue (depuis l'étape E2) à l'aide de la donnée unique d'identification IDᵢ également reçue correspondant à cette carte, pour obtenir la clé de transport/d'authentification associée à cette carte CP (ou plus précisément associée au circuit intégré de cette carte): MSKD_{i-calculé}=AES(IDᵢ, MSK) (étape E136); puis
   ▪ en calculant *res2* à l'aide de cette clé, de façon similaire au calcul de *res1* mais en utilisant cette fois-ci la clé MSKD_{i-calcuiée}; et
- la comparaison entre les deux valeurs *res1* et *res2* pour valider ou non l'authentification (étape E137).

L'authentification du dispositif d'accès ou de personnalisation par la carte CP est similaire, en inversant les rôles: la première commande APDU permet à la carte CP de générer un nombre aléatoire c qui est alors communiqué au dispositif d'accès ou de personnalisation.

En cas d'authentification mutuelle positive, la personnalisation E14 du circuit intégré de la carte à puce CP est alors réalisée par le dispositif de personnalisation. Sinon la personnalisation n'est pas autorisée.

Une telle personnalisation peut consister à mémoriser des instructions de logiciel en mémoire non volatile 12 du circuit intégré de sorte que la carte à puce offre des "services" (porte-monnaie électronique, titre de transport, passeport, etc.).

Cette personnalisation peut également être telle que décrite dans la publication US 2007/095927, où il est prévu de personnaliser des clés de cryptage, et non d'authentification, utilisées pour sécuriser des communications entre l'émetteur de la carte à puce et le dispositif comprenant cette carte à puce. Cette personnalisation des clés comprend notamment deux sous-étapes de diversification, l'une produisant des clés maîtres et l'autre des clés de circuit.

Dans le processus tel que présenté ci-dessus, le site de production qui doit accéder au circuit intégré a donc connaissance de la clé racine MSK, communiquée par le donneur d'ordre ou fabriquant de cartes à puce 100. Cette connaissance peut constituer un inconvénient, notamment en terme de sécurité, dès lors que cette même clé racine MSK est utilisée pour accéder à la personnalisation d'un grand nombre d'autres circuits intégrés/cartes à puce.

En outre, la gestion des clés dans la publication US 2007/095927 requiert la communication d'une clé supplémentaire de transfert (transfer key) ainsi que d'une valeur de départ de l'émetteur (issuer seed), complexifiant le processus de gestion.

La présente invention vise à améliorer la sécurité de l'accès à des circuits intégrés, notamment vis-à-vis de la gestion de la clé racine MSK commune à un grand nombre de circuits intégrés fabriqués et utilisée pour générer les clés personnelles de transport/d'authentification propres à ces circuits intégrés.

Dans ce dessein, l'invention concerne notamment un procédé de production d'un circuit intégré tel que défini par la revendication 1.

Ce procédé comprend notamment une étape d'authentification, par un dispositif d'accès, dudit circuit intégré en utilisant une clé personnelle d'authentification propre audit circuit intégré et mémorisée dans ce circuit intégré, ladite clé personnelle d'authentification étant générée par diversification d'une clé racine, où la génération par diversification de ladite clé racine met en oeuvre au moins deux étapes de diversification d'une clé, et ledit dispositif d'accès reçoit, d'un site central, une clé intermédiaire résultant de la première étape de diversification de la clé racine.

Selon l'invention, le dispositif d'accès, représentant notamment le site de personnalisation des cartes à puce dans l'exemple décrit ci-dessus, ne reçoit plus la clé racine, mais une clé intermédiaire dans la génération de la clé personnelle d'authentification propre aux circuits intégrés. Cela est rendu possible par la décomposition de la diversification de la clé racine en au moins deux étapes de diversification de clé, notamment une composition de ces étapes successives au sens où la clé intermédiaire produite par l'une de ces étapes est utilisée comme entrée pour l'étape suivante.

L'insécurité relative à la connaissance de la clé racine est donc supprimée.

Notamment, un choix approprié des critères appliqués pour chaque étape de diversification permet d'obtenir des clés intermédiaires opérationnelles pour un nombre plus ou moins limité de circuits intégrés, comme il sera vu par la suite.

Par ailleurs, cet accès au circuit intégré peut s'inscrire dans un processus de personnalisation de ce circuit intégré, voire dans un processus de production d'un tel circuit intégré incluant une personnalisation initiale.

En particulier, ledit dispositif d'accès met en oeuvre la deuxième étape de diversification sur ladite clé intermédiaire reçue, de sorte à obtenir ladite clé personnelle d'authentification pour l'authentification du circuit intégré. Connaissant ainsi la clé personnelle d'authentification, le dispositif d'accès peut procéder à l'authentification, en vue par exemple d'accéder aux mémoires non volatiles du circuit intégré pour les personnaliser.

Dans un mode de réalisation, la clé personnelle d'authentification est obtenue par diversification de la clé racine à partir d'un numéro de série unique (ou donnée unique d'identification) du circuit intégré.

Selon une caractéristique particulière, la première étape de diversification comprend une opération de diversification de ladite clé racine à partir d'une première sous-partie du numéro de série du circuit intégré. Selon le choix de la première sous-partie, cette disposition permet d'obtenir des clés intermédiaires opérationnelles pour un sous-ensemble des circuits intégrés fabriqués. On peut ainsi faire correspondre une clé intermédiaire à un tiers manipulant un sous-ensemble des circuits intégrés fabriqués. Ce tiers n'a ainsi aucune connaissance de la clé racine et/ou des autres clés intermédiaires qui sont opérationnelles pour des circuits intégrés qu'il ne manipule pas.

En particulier, ladite première sous-partie du numéro de série est commune à une pluralité de circuits intégrés. Elle peut par exemple comprendre une information de numéro de lot de wafers ou de numéro de wafer sur lequel sont construits les circuits intégrés. Il s'agit ainsi de lot de circuits intégrés fabriqués ensembles.

La clé intermédiaire générée correspond ainsi à ce lot de wafers ou à ce wafer particulier.

Selon une autre caractéristique particulière, la deuxième étape de diversification comprend une opération de diversification de ladite clé intermédiaire à partir d'une deuxième sous-partie du numéro de série du circuit intégré.

En particulier, ladite deuxième sous-partie du numéro de série comprend une information d'identification du circuit intégré à l'intérieur de ladite pluralité de circuits intégrés identifié par ladite première sous-partie. Il peut par exemple s'agit de la position du circuit intégré sur un wafer ou dans un lot de wafers. On a ainsi individualisé la clé d'authentification pour chaque circuit intégré fabriqué.

Notamment, lesdites première et deuxième sous-parties du numéro de série sont complémentaires dans ledit numéro de série unique.

Dans un mode de réalisation, le procédé comprend une étape de fabrication du circuit intégré au niveau d'un site de fabrication et une étape de réception, par ledit site de fabrication, de ladite clé racine ou intermédiaire en provenance du site central, et
ladite fabrication comprend une étape de génération de ladite clé personnelle d'authentification par diversification de ladite clé racine ou intermédiaire à l'aide desdites étapes de diversification et une étape d'enregistrement de ladite clé personnelle d'authentification dans une mémoire non volatile dudit circuit intégré.

Ainsi, au sortir du site de fabrication, tous les circuits intégrés contiennent leur propre clé d'authentification.

Dans une variante, le procédé comprend une étape de fabrication du circuit intégré au niveau d'un site de fabrication et une étape de réception, par ledit site de fabrication, de ladite clé racine ou intermédiaire en provenance du site central, et
ladite fabrication comprend une étape d'enregistrement de ladite clé racine ou intermédiaire dans une mémoire non volatile dudit circuit intégré.

Cette disposition permet de simplifier les opérations relatives aux clés secrètes réalisées par le fondeur/fabriquant des circuits intégrés, car il n'a plus à générer les clés personnelles d'authentification propres à chacun des circuits et ne manipule désormais plus qu'une seule clé, la clé racine, pour un plus ou moins grand nombre de circuits intégrés fabriqués simultanément.

Les coûts opérationnels et les risques liés à la manipulation des clés secrètes sont ainsi réduits pour le fondeur.

Par ailleurs, la gestion du journal de l'étape E5 est nettement simplifiée.

Selon une caractéristique particulière, le procédé comprend une étape consistant à générer, au sein du circuit intégré et en réponse à un premier signal reçu par le circuit intégré, ladite clé personnelle d'authentification par diversification de la clé enregistrée.

Cette diversification met en oeuvre, bien entendu, les deux étapes de diversification.

Cette génération en interne accroît, par ailleurs, la confidentialité des clés personnelles d'authentification car leurs valeurs ne sont pas connues des organes externes (journal, fondeur, etc.).

En particulier, le procédé comprend des étapes consistant à :
- effacer ladite clé enregistrée de la mémoire non volatile; et
- enregistrer ladite clé personnelle d'authentification dans la mémoire non volatile du circuit intégré.

Notamment, ledit effacement peut être réalisé par écrasement en mémoire de la clé enregistrée par la clé personnelle d'authentification générée.

La mémorisation de la clé d'authentification permet de réaliser l'authentification lors des accès, par exemple pour personnalisation, au circuit intégré.

L'écrasement garantit, quant à lui, qu'en possession de ce circuit intégré, une personne mal intentionnée ne puisse récupérer la clé racine ou intermédiaire qui peut être éventuellement réutilisée.

Dans un mode de réalisation, la clé personnelle d'authentification est obtenue par diversification de la clé racine à partir d'un numéro de série unique du circuit intégré stockée dans ladite mémoire non volatile du circuit intégré. A noter que l'enregistrement de ce numéro de série peut avoir lieu au niveau du site de fabrication, en même temps que l'enregistrement de la clé racine.

Ainsi, la génération de la clé personnelle d'authentification peut être menée de façon autonome par le circuit intégré lui-même, sans nécessiter une information provenant de l'extérieur du circuit intégré.

Le numéro de série unique du circuit intégré peut notamment comprendre un identifiant d'un lot de tranches de silicium ou d'une tranche de silicium sur laquelle est élaboré ledit circuit intégré, et comprendre une identification (un identifiant ou des coordonnées spatiales) dudit circuit intégré à l'intérieur dudit lot ou de la tranche.

Dans un mode de réalisation de l'invention, ledit premier signal est un premier signal analogique de mise sous tension du circuit intégré. Il s'agit généralement de la première mise sous tension de test par un équipement de test sur le site de fabrication avant livraison à un site de personnalisation, afin de savoir si le circuit intégré est opérationnel ou destiné au rebut.

Cette disposition permet de générer la clé personnelle d'authentification avant toute intervention sur le circuit intégré. Du fait de la présence de tests sur le site de fabrication, cette disposition conduit à ce que les circuits intégrés, lorsqu'ils sont livrés pour le personnaliser, contiennent déjà leur clé personnelle de transport, différente pour chaque circuit intégré. On évite ainsi que la seule connaissance de la clé racine soit susceptible de donner l'accès à toutes les cartes ayant cette clé racine en commun.

En variante, ledit premier signal est un premier signal numérique, c'est-à-dire contenant des informations numériques. Cela permet de générer les clés personnelles d'authentification uniquement lorsque les moyens de traitement numérique du circuit intégré (le processeur ou microcontrôleur) sont sollicités. Généralement, ce premier accès par signal numérique est réalisé lors de la première tentative de personnalisation du circuit intégré.

Ainsi, dans cette configuration, les délais d'attente correspondant à la (sous)-diversification de la clé racine/intermédiaire pour obtenir la clé personnelle d'authentification sont déportés hors du site de fabrication. Ceci permet d'éviter toute attente au niveau de ce site.

En outre, étant donné que les traitements de signaux analogiques (site de fabrication) sont plus brefs que ceux des signaux numériques (généralement au site de personnalisation), cette disposition rend la génération des clés d'authentification quasi-transparente eu égard au délai de traitement d'un tel signal numérique.

En particulier, le premier signal numérique est une première instruction de commande, par exemple de type APDU envoyée par le dispositif d'accès et par exemple lors de la première tentative d'accès pour personnalisation du circuit intégré. Une instruction de commande a notamment pour fonction de faire exécuter une action au circuit intégré, en appelant un programme (le système d'exploitation par exemple) déjà mémorisé dans le circuit intégré.

Selon une caractéristique particulière, le procédé comprend, à réception dudit premier signal par le circuit intégré, une étape d'écriture, dans une mémoire non volatile programmable qu'une seule fois (type PROM_ *Programmable Read Only Memory_* ou OTP_ *One Time Programmable),* d'une information indiquant qu'un premier signal a déjà été reçu.

Grâce à cette information (par exemple un drapeau ou tout autre indicateur binaire), le circuit intégré a connaissance, à moindre coût, de la réalisation déjà effectuée de la diversification de la clé enregistrée pour obtenir sa personnelle clé d'authentification.

L'inscription de cette information dans une mémoire programmable qu'une seule fois garantit, en outre, qu'aucune action malveillante ne puisse entraîner une nouvelle réalisation de la diversification de la clé enregistrée par le circuit intégré.

Ainsi, dans ce cas, le procédé peut comprendre, à réception d'un signal (de même nature que ledit premier signal) et préalablement au déclenchement de la génération de ladite clé personnelle d'authentification, une étape de détermination de la présence, en mémoire non volatile programmable qu'une seule fois, d'une information indiquant qu'un premier signal a déjà été reçu. Ainsi, le circuit intégré est apte à bloquer, de façon efficace, une nouvelle génération d'une clé personnelle d'authentification si celle-ci a déjà été réalisée.

Selon une caractéristique particulière, ladite écriture de l'information qu'un premier signal a déjà été reçu est postérieure à une étape d'enregistrement de la clé personnelle d'authentification dans la mémoire non volatile du circuit intégré. Cette disposition protège le circuit intégré de certains problèmes pouvant résulter de la coupure d'alimentation de celui-ci avant la fin de la génération interne par diversification. En effet, l'information d'un premier accès déjà réalisé est ainsi inscrite en mémoire uniquement lorsque la clé personnelle d'authentification a bien été générée.

Bien entendu, des variantes peuvent être prévues, telle que l'inscription de cette information préalablement à la génération par diversification.

Selon une autre caractéristique particulière, ledit circuit intégré transmet, à un dispositif externe et postérieurement à une étape d'enregistrement de la clé personnelle d'authentification dans la mémoire non volatile du circuit intégré, une réponse audit premier signal. Bien entendu, ce dispositif externe est notamment celui ayant généré ledit premier signal à l'attention du circuit intégré. Il peut s'agir en particulier dudit dispositif d'accès lorsque celui-ci est utilisé, par exemple, pour effectuer la toute première personnalisation du circuit intégré.

Cette disposition permet d'ajuster la réponse en fonction du succès ou non de l'étape de génération par diversification. Ainsi, une éventuelle erreur peut être remontée au dispositif externe afin, par exemple, de mettre le circuit intégré au rebut.

En particulier, ledit dispositif externe attend un réponse audit premier signal pendant au moins 50 ms (millisecondes) avant de générer une erreur, notamment au moins 100 ms, de préférence au moins 250 ms. La génération par diversification introduit des délais supplémentaires de traitement par rapport aux traitements des premiers signaux. Cette disposition assure ainsi que ces délais de génération sont pris en compte au niveau des dispositifs de test et/ou de personnalisation du circuit intégré.

Dans un mode de réalisation, une même clé racine ou intermédiaire est enregistrée dans une pluralité de circuits intégrés fabriqués sur une même tranche de silicium, au niveau du site de fabrication. Cette disposition permet au fondeur, fabricant des circuits intégrés, de ne manipuler qu'un nombre réduit de clés racines/intermédiaires, voire une seule clé, pour tous les circuits d'une même tranche de silicium (*wafer*) ou d'un même lot. A noter qu'une même clé racine/intermédiaire peut être utilisée pour un lot entier de tranches de silicium.

Par ailleurs, l'étape d'enregistrement de la clé racine ou intermédiaire en mémoire non volatile peut comprendre une étape d'accès direct à ladite mémoire non volatile, c'est-à-dire sans passer par le processeur ou une interface de communication classique du circuit intégré, et une étape d'écriture de ladite clé racine dans la mémoire lors de cet accès direct. Cet accès direct permet d'éviter la détection d'une anomalie si le circuit intégré est mis sous tension sans détenir la clé racine et que des moyens de détection d'une anomalie sur les clés secrètes équipent ce circuit.

Selon divers aspects, l'étape d'authentification peut comprendre:
- une authentification du circuit intégré par le dispositif d'accès;
- une authentification du dispositif d'accès par le circuit intégré; ou
- une authentification mutuelle regroupant les deux authentifications précitées.

Chaque authentification peut être de type challenge-response.

Notamment, le procédé peut comprendre des étapes de personnalisation d'une pluralité de circuits intégrés au niveau d'un site distinct de pré-personnalisation ou personnalisation,
ces étapes de personnalisation étant précédées d'authentifications au cours desquelles on obtient le numéro de série d'un circuit intégré correspondant par envoi d'une commande à ce circuit intégré, on diversifie ladite clé racine à partir du numéro de série obtenu et on réalise une authentification, de préférence mutuelle, à partir de cette clé racine ente le circuit intégré et un dispositif de personnalisation.

Selon une caractéristique de l'invention, le procédé comprend le montage dudit circuit intégré dans un corps de carte conforme à la norme ISO 7816. Bien entendu, le circuit intégré peut également être monté sur un module de dispositif sans contact conforme à la norme ISO 14443.

Des dispositifs conformes à l'une de ces normes peuvent notamment revêtir la forme d'une carte au format ID1, d'un passeport biométrique, d'une clé USB, d'une mémoire de stockage type microSD, etc.

Selon une autre caractéristique de l'invention, ladite diversification de la clé racine met en oeuvre une fonction de hachage, par exemple SHA-256 *("Secure Hash Algorithm"* produisant un résultat ou *hash* sur 256 bits).

Selon une autre caractéristique de l'invention, ledit circuit intégré comprend, en mémoire, ladite clé personnelle d'authentification, et ladite étape d'authentification met en oeuvre un algorithme cryptographique à clé symétrique. Bien entendu, la mise en oeuvre d'algorithmes cryptographies à clés asymétriques peut être envisagée.

Selon une autre caractéristique de l'invention, ledit procédé est mis en oeuvre au cours d'une opération de personnalisation dudit circuit imprimé.

Corrélativement, l'invention concerne un système de production d'un circuit intégré tel que défini par la revendication 16.

Ce système comprend notamment un dispositif d'accès pourvu d'un module d'authentification dudit circuit intégré en utilisant une clé personnelle d'authentification propre audit circuit intégré et mémorisée dans le circuit intégré, ladite clé personnelle d'authentification étant générée par diversification d'une clé racine, dans lequel :
- la génération par diversification de ladite clé racine met en oeuvre au moins deux étapes de diversification d'une clé, et
- le système comprend un site central apte à générer une clé intermédiaire résultant de la première étape de diversification de la clé racine et à transmettre ladite clé intermédiaire audit dispositif d'accès.

Le système présente des avantages similaires à ceux du procédé exposé ci-dessus.

En particulier, ledit dispositif d'accès est configuré pour générer ladite clé personnelle d'authentification par application de la deuxième étape de diversification sur ladite clé intermédiaire reçue.

De façon optionnelle, le système peut comprendre des moyens se rapportant aux caractéristiques du procédé exposé précédemment, et notamment une unité de fabrication, une unité de personnalisation et d'authentification.

En particulier, l'unité de fabrication peut être configurée pour fabriquer le circuit intégré, recevoir ladite clé racine ou intermédiaire en provenance du site central, et enregistrer ladite clé racine ou intermédiaire dans une mémoire non volatile dudit circuit intégré.

Ainsi, le circuit intégré peut comprendre un module apte à générer, en réponse à un premier signal reçu, ladite clé personnelle d'authentification par diversification de la clé racine ou intermédiaire enregistrée.

Dans ce cas, le circuit intégré peut également comprendre un moyen apte à enregistrer une information indiquant qu'un premier signal a déjà été reçu, et ce moyen pouvant comprendre une mémoire non volatile programmable qu'une seule fois et être configuré pour écrire ladite information dans la mémoire non volatile programmable qu'une seule fois.

En outre, ledit circuit intégré peut comprendre des moyens d'enregistrement de la clé personnelle d'authentification par écrasement, en mémoire non volatile, de ladite clé racine ou intermédiaire enregistrée.

Le module d'authentification est par exemple opérationnel lors d'une session d'authentification précédant une personnalisation de la mémoire non volatile du circuit intégré.

D'autres particularités et avantages de l'invention apparaîtront encore dans la description ci-après, illustrée par les dessins ci-joints, dans lesquels :
- la **figure 1** représente un système de production selon l'état de l'art ;
- la **figure 2** illustre schématiquement un circuit intégré dans une carte à puce comprenant une clé de transport/d'authentification selon l'état de l'art ;
- la **figure 3** représente, sous forme de logigramme, des étapes de production de cartes à puce ou de circuits intégrés selon l'état de l'art ;
- la **figure 4** représente un système de production mettant en oeuvre la présente invention selon un premier mode de réalisation ;
- la **figure 5** représente, sous forme de logigramme, des étapes de production de cartes à puce ou de circuits intégrés selon le premier mode de réalisation de la **figure 4** ;
- les **figures 6** et **7** illustrent schématiquement l'état des mémoires d'un circuit intégré à deux instants différents dans la production de celui-ci selon le premier mode de réalisation de la **figure 4**, respectivement avant et après la génération, au sein du circuit intégré, d'une clé personnelle de transport ou d'authentification ;
- la **figure 8** représente un système de production mettant en oeuvre la présente invention selon un deuxième mode de réalisation ; et
- la **figure 9** représente, sous forme de logigramme, des étapes de production de cartes à puce ou de circuits intégrés selon le deuxième mode de réalisation de la **figure 8****.**

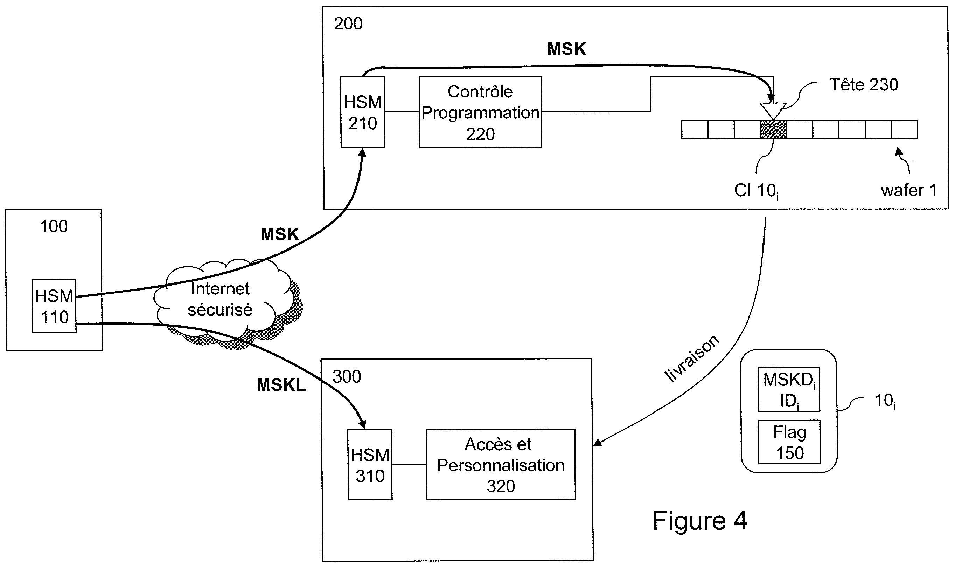

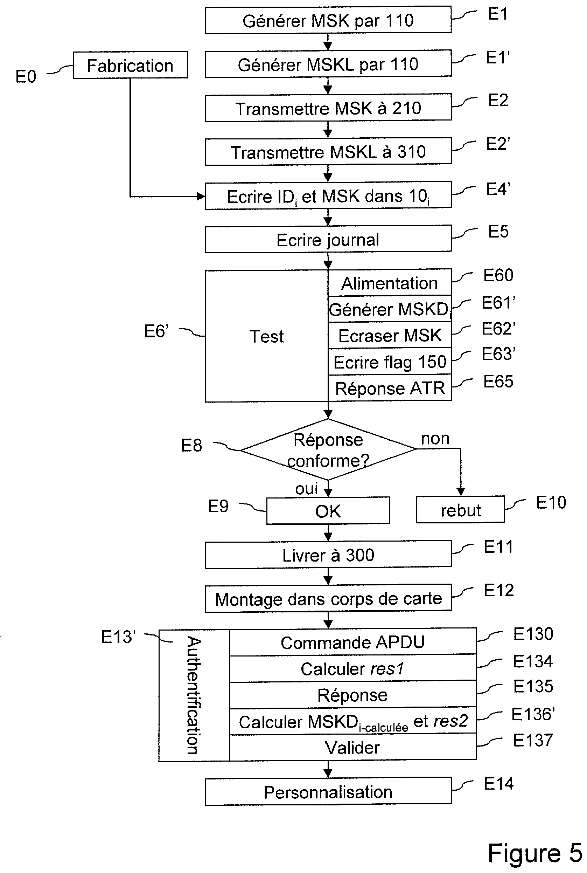

Les **figures 4** et **5** illustrent un premier mode de réalisation de l'invention en reprenant les mêmes références que les **figures 1** et **3** décrites précédemment pour désigner des mêmes éléments ou mêmes étapes.

Dans ce premier mode de réalisation, l'étape E1 est suivie d'une étape E1' au cours de laquelle le module HSM 110 génère également une clé intermédiaire MSKL par une première étape S1 de diversification de la clé racine MSK à partir par exemple du numéro de lot IDₗₒₜ ou du numéro de wafer ID_{wafer} qui est en train d'être construit par le site de fabrication 200. Comme évoqué précédemment, ce numéro de lot ou de wafer constitue une première sous-partie de la donnée unique d'identification ou numéro de série unique IDᵢ d'un circuit intégré 10ᵢ. Cette sous-partie est notamment commune à un ensemble de circuits intégrés (ceux du même lot ou du même wafer) et à ce titre, la clé intermédiaire MSKL est commune à ce même ensemble de circuits intégrés.

A titre d'illustration, cette première étape S1 de diversification peut mettre en oeuvre une fonction de hachage cryptographique, par exemple SHA-256 qui présente l'avantage d'une exécution rapide et difficilement détectable. Ainsi, à partir d'une clé racine MSK de 16 octets et d'un numéro de lot Idₗₒₜ entre 4 et 8 octets, lesquels sont simplement concaténés en entrée de la fonction de hachage, on obtient une clé intermédiaire MSKL sur 32 octets: MSKL = SHA-256( IDₗₒₜ ∥ MSK).

Suite à l'étape E1', l'étape E2 consiste uniquement à transmettre la clé racine MSK au fondeur 200, puis une étape E2' consiste à transmettre la clé intermédiaire MSKL au site de personnalisation 300.

A ce stade, on observe donc que le site de personnalisation 300 n'a pas connaissance de la clé racine MSK, ce qui accroît la sécurité de la protection des circuits intégrés.

L'étape E2' est suivie immédiatement de l'étape E4' similaire à l'étape E4 de la **figure 3**, si ce n'est que la clé enregistrée dans le circuit intégré 10ᵢ est la clé racine MSK reçue.

On notera en outre, qu'un programme de génération automatique d'une clé personnelle de transport/d'authentification MSKDᵢ est également mémorisé dans la mémoire ROM 14, prévu lors de la conception physique E0 du circuit intégré.

A noter que certains programmes peuvent toutefois être introduits et mémorisés dans la mémoire non volatile 12 par les moyens 220 et 230.

Il en résulte des circuits intégrés qui comprennent chacun :
- leur numéro de série unique IDᵢ, par exemple composée des sous-parties Iₗₒₜ (ou ID_{wafer}) et ID_{circuit};
- la clé racine MSK.

On remarque donc à ce stade que tous les circuits intégrés possèdent en mémoire la même clé racine MSK. Ainsi, le fondeur 100 ne manipule que cette clé racine, sans avoir à générer les clés personnelles de chacun des circuits intégrés ni de clé intermédiaire MSKL.

Pour le fondeur, l'étape E3, qui est délicate, est ainsi supprimée. Ses traitements sont donc accélérés avec notamment une réduction des risques d'erreurs liées à la manipulation de clés secrètes.

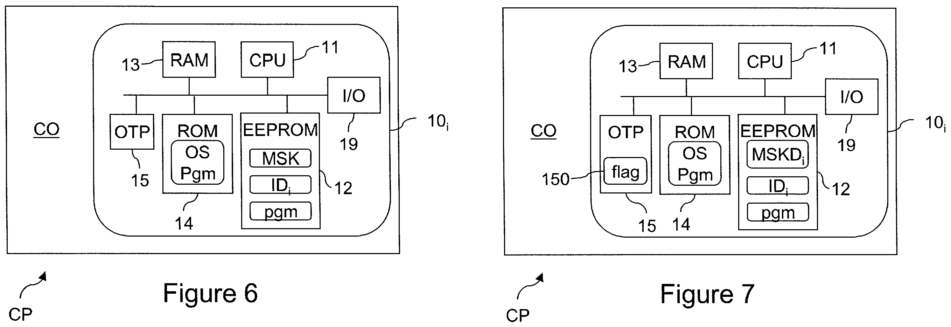

La **figure 6** illustre l'état de la mémoire non volatile 12 à ce stade.

L'étape E5 qui suit est par ailleurs simplifiée car elle ne nécessite plus l'inscription des clés personnelles MSKDᵢ; seuls les numéros de série IDᵢ sont mémorisés.

Puis à l'étape E6' correspondant sensiblement à l'étape E6, lorsque le circuit intégré est mis sous tension pour la première fois (E60), il déclenche automatiquement l'exécution (E61'), par le processeur 11, du programme de génération automatique de clé personnelle de transport/d'authentification MSKDᵢ.

Ce calcul de génération consiste par exemple à diversifier la clé racine MSK en deux étapes S1 et S2 de diversification successives à partir du numéro de série unique IDᵢ, ces deux informations (clé racine et numéro de série) étant enregistrées dans la mémoire non volatile 12 à laquelle accède le processeur 11.

Comme évoqué précédemment, la première étape S1 consiste à obtenir la clé intermédiaire MSKL à partir de la clé racine MSK en mémoire, par exemple MSKL = SHA-256( IDₗₒₜ ∥ MSK). Puis la deuxième étape S2 consiste à diversifier cette clé intermédiaire MSKL à partir du numéro de circuit intégré ID_{circuit} (entre 4 et 8 octets) dans le lot ou sur le wafer (ou les coordonnées X_{circuit}, Y_{circuit}).

A titre d'illustration, on peut simplement concaténer ID_{circuit} avec la clé intermédiaire MSKL et appliquer sur cette valeur obtenue la fonction de hachage SHA-256: MSKDᵢ = SHA-256(ID_{circuit} ∥ MSKL).

On peut noter que l'utilisation d'une fonction de hachage telle que SHA-256 à l'avantage de simplifier les traitements pour former le mot d'entrée de ces fonctions: pas de troncature et une seule concaténation (ici représentée par les symboles "∥") est utile, puisqu'une fonction de hachage peut recevoir des données d'entrée de longueur variable.

En outre, la fonction de hachage SHA-256 a l'avantage de générer une clé personnelle de transport/d'authentification sur 32 octets, ce qui correspond à la taille d'une clé pour l'algorithme AES qui peut être utilisé pour l'authentification E13. Notamment, en fonction de l'algorithme d'authentification, on utilisera tout ou partie des octets de la clé personnelle ainsi générée: pour un algorithme de type 3DES ou AES-128, seuls les 16 premiers octets de la clé personnelle MSKDᵢ seront utilisés; pour un algorithme de type AES-192, seuls les 24 premiers octets de la clé personnelle MSKDᵢ seront utilisés; et pour un algorithme de type AES-256, les 32 octets de la clé personnelle MSKDᵢ seront utilisés.

Suite à l'étape E61', le processeur enregistre (E62') la clé personnelle MSKDᵢ ainsi générée dans la mémoire non volatile 12 en remplacement de la clé racine MSK. Pour éviter de rendre la clé racine accessible à une personne mal intentionnée, cette opération est réalisée par écrasement de la clé racine MSK par la nouvelle clé personnelle MSKDᵢ.

Ensuite, le processeur écrit dans une mémoire 15 non volatile programmable qu'une seule fois (**figure 6**), également connue sous la terminologie "mémoire PROM" _ *Programmable Read Only Memory_* ou "mémoire OTP"_ *One Time Programmable*_, un drapeau 150 *(flag,* par exemple un bit) indiquant que la génération de la clé personnelle MSKDᵢ a déjà eu lieu (étape E63').

La mémoire OTP 15 peut toutefois être une partie de la mémoire non volatile non réinscriptible ROM 14.

Une telle mémoire OTP 15, par exemple par grillage irréversible de fusibles, empêche toute modification de l'information 150 et donc garantit une sécurité quant à savoir si la clé personnelle MSKDᵢ a bien été générée.

La présence de cette information dans la mémoire OTP 15 est notamment vérifiée à chaque mise sous tension du circuit intégré (par exemple au début de l'exécution du programme de génération automatique de clé personnelle) pour déterminer s'il s'agit de la première mise sous tension du circuit, auquel cas la génération de la clé personnelle MSKDᵢ doit être réalisée comme décrit ci-dessus, ou s'il s'agit d'une mise sous tension ultérieure, auquel cas l'exécution du programme de génération de cette clé personnelle est bloquée.

Ainsi le drapeau 150 indique qu'un premier signal de mise sous tension a déjà été reçu.

Dans ce mode de réalisation, l'étape E63' succède à l'étape E61' de génération, sécurisant ainsi le circuit intégré contre des problèmes pouvant découler d'une éventuelle coupure d'alimentation avant la fin de la génération par diversification E61'. En effet, dans ce cas il n'est pas indiqué, à juste titre, dans la mémoire 15, que la clé personnelle MSKDᵢ a été générée. La prochaine mise sous tension E61 déclenchera alors à nouveau cette génération.

En variante toutefois, l'étape E63' peut précéder l'étape E61' ou être concomitante.

Suite à ces étapes, l'étape E65 similaire à celle décrite en lien avec la **figure 3** est réalisée.

Cet ordre des étapes permet, si nécessaire, d'indiquer dans la réponse à la mise sous tension (ATR dans le cas d'un circuit intégré prévu pour un dispositif avec contact conforme à la norme ISO/IEC 7816 et ATS dans le cas d'un circuit intégré prévu pour un dispositif sans contact conforme à la norme ISO/IEC 14443) qu'une erreur ou une anomalie s'est produite lors de la génération de la clé personnelle par diversification.

Des moyens de détection d'erreur dans l'exécution d'un programme de la une carte à puce sont alors prévus dans le circuit intégré 10ᵢ.

Et l'indication d'une erreur ou anomalie est ainsi détectée lors du test E8 pour mettre le circuit intégré 10ᵢ au rebut.

En variante toutefois, tout ou partie des étapes E61', E62' et E63' peut être réalisée après l'étape E65.

En raison du temps nécessaire à la génération de la clé personnelle MSKDᵢ dans le circuit intégré 10ᵢ (prenant entre 50 et 500 ms, généralement entre 100 et 200 ms), le module de contrôle 220 est configuré pour attendre suffisamment longtemps lors du test E8 pour permettre la génération complète de la clé personnelle.

Ainsi ce module de contrôle est configuré pour attendre la réponse ATR/ATS à la mise sous tension, au moins 50 ms (millisecondes) avant de générer une erreur, notamment au moins 100 ms, et de préférence au moins 250 ms voire 500 ms. Dans la plupart des cas, l'attente ne sera pas supérieure à 1 seconde, voire 500 ms.

On constate donc que cette attente est nettement supérieure à celle pour une réponse classique à la mise sous tension.

Les étapes E9, E10, E11 et E12 sont les mêmes que celles décrites précédemment.

La **figure 7** illustre l'état du circuit intégré 10ᵢ au moment de la livraison E11: la mémoire 12 comprend la clé personnelle MSKDᵢ mais plus la clé racine MSK, et la mémoire OTP 15 comprend le drapeau 150.

L'étape d'authentification E13' est similaire à l'étape E13 décrite précédemment si ce n'est que la sous-étape E136' incorporant le calcul de la clé personnelle MSKD_{i-calculée} par le dispositif de personnalisation est différente.

En effet, le site de personnalisation 300 ayant reçu uniquement la clé intermédiaire MSKL (étape E1'), cette opération de calcul comprend la mise en oeuvre de la deuxième étape S2 de diversification évoquée précédemment, sur ladite clé intermédiaire MSKL reçue à partir du numéro de circuit ID_{circuit} obtenu auprès de la carte CP, de sorte à obtenir ladite clé personnelle MSKD_{i-calculée}: MSKD_{i-calculée} = SHA-256 (ID_{circuit} ∥ MSKL).

De préférence, une authentification mutuelle entre le dispositif de personnalisation et le circuit intégré est menée.

On constate donc que l'authentification peut être réalisée sans que le dispositif de personnalisation 320 ait connaissance de la clé racine MSK de laquelle découlent les clés personnelles MSKDᵢ des différents circuits intégrés.

L'insécurité relative à la connaissance de la clé racine est ainsi supprimée.

Par ailleurs, un choix approprié des critères appliqués pour chaque étape S1 ou S2 de diversification permet d'obtenir des clés intermédiaires opérationnelles pour un nombre plus ou moins limité de circuits intégrés. Notamment, la clé intermédiaire MSKL fournie à 300 peut concerner uniquement les circuits intégrés traités par 300, en livrant par exemple uniquement les lots ou *wafers* dont l'identifiant IDₗₒₜ ou ID_{wafer} a servi à la génération E1' de cette clé intermédiaire MSKL communiquée.

La personnalisation E14 qui suit reste classique.

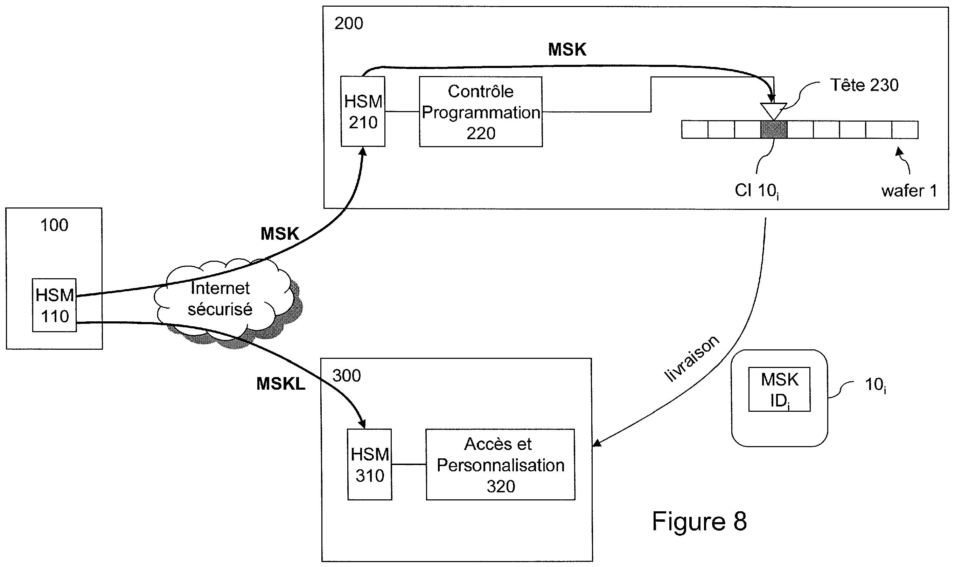

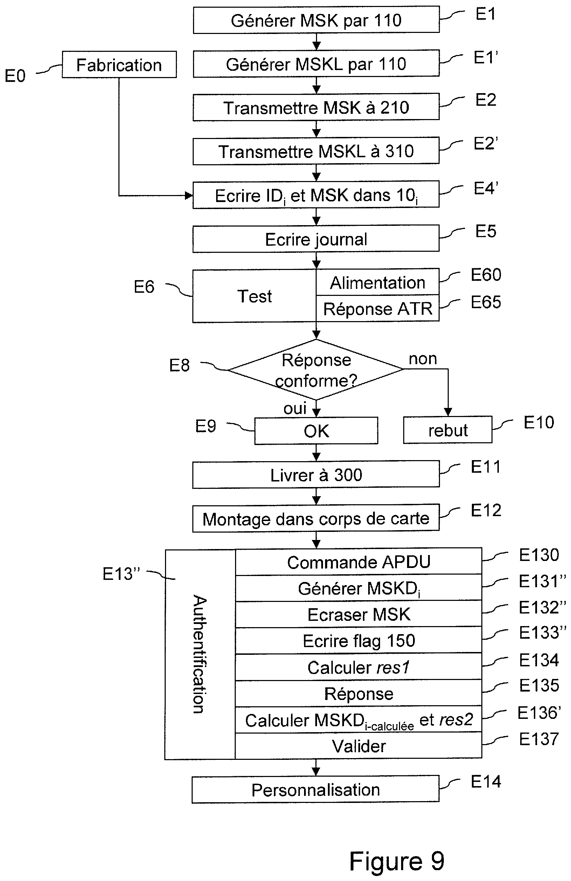

Les **figures 8** et **9** illustrent un deuxième mode de réalisation de l'invention, dans lesquelles les mêmes références que celles décrites précédemment concernent des mêmes éléments ou mêmes étapes.

Ce mode de réalisation se distingue du premier en ce que la génération de la clé personnelle MSKDᵢ au sein des circuits intégrés 10ᵢ est réalisée à réception de la première commande valide par le circuit intégré 10ᵢ, c'est-à-dire à réception d'un signal numérique, dans notre exemple la commande APDU E130.

Le module de programmation 220 inscrit (E4') toujours en mémoire non volatile 12 du circuit intégré 10ᵢ la clé racine MSK et les numéros de série IDᵢ.

Puis, le test d'alimentation E6 est similaire à celui de la **figure 3**.

Au moment de la livraison E11, la mémoire 12 comprend alors la clé racine MSK et non la clé personnelle MSKDᵢ, et ne comprend pas le drapeau 150 en mémoire OPT 15 (**figure 6**).

L'authentification E13" diffèrent en ce qu'à réception E130 de la toute première commande APDU, l'exécution du programme de génération automatique de clé personnelle de transport/d'authentification MSKDᵢ est déclenchée au sein du circuit intégré 10ᵢ (E131").

Bien entendu, d'autres critères de déclenchement à réception d'une "première" commande peuvent être mis en oeuvre, comme par exemple la réception d'une première commande valide susceptible d'entraîner l'exécution d'une action par le processeur 11, ou d'une première commande parmi une catégorie de commandes ou parmi une liste prédéfinie de commandes.

Les étapes E132" et E133" sont respectivement similaires aux étapes E62' et E63' décrites précédemment, conduisant, à réception d'une commande, à vérifier la présence ou non du flag 150 en mémoire 15 avant de déclencher l'exécution E131" de la génération de la clé personnelle MSKDᵢ.

Les étapes suivantes E134, E135, E136', E137 et E14 sont inchangées permettant l'authentification et la personnalisation du circuit intégré 10ᵢ. L'état de ce circuit intégré avant l'étape de personnalisation E14 est identique à celui représenté sur la **figure 7**.

De façon similaire au premier mode de réalisation, l'ordre des étapes E131", E132", E133" peut être modifié, étant entendu que l'étape E135 fournit, dans la réponse, la valeur *res1* calculée à partir de la clé personnelle MSKDᵢ générée à l'étape E131".

En outre, lors de l'authentification E13", le dispositif de personnalisation 320 est configuré pour attendre le temps nécessaire pour que le circuit intégré 10ᵢ puisse générer la clé personnelle MSKDᵢ, soit généralement au moins 50 ms, voire 100, 250 ou 500 ms, avant de générer un message d'erreur ou d'envoyer une nouvelle commande APDU.

On notera toutefois que les temps d'attente de tels dispositifs 320 à des commandes est généralement plus important que celui du module de contrôle 220 évoqué précédemment. A titre d'exemple, il est courant que des lecteurs de carte à puce attentent une seconde avant de considérer que l'opération demandée est un échec.

Ainsi, ce mode de réalisation s'intègre particulièrement bien aux temps d'attente actuels des dispositifs de lecture de circuits intégrés ou cartes à puces. La génération de la clé personnelle MSKDᵢ apparaît ainsi quasi transparente eu égard au délai de traitement de la commande numérique.

Egalement, la réponse E135 peut renseigner de toute erreur ou anomalie s'étant produite pendant la génération E131" ou les enregistrements E132" et E133".

Par ailleurs, bien que dans ces exemples de réalisation, la première partie IDₗₒₜ (ou ID_{wafer}) du numéro de série et la deuxième partie ID_{circuit} de ce même numéro de série utilisées pour la génération en deux étapes successives de diversification de la clé personnelle sont des parties complémentaires du numéro de série unique: IDᵢ = IDₗₒₜ (ou ID_{wafer}) ∥ ID_{circuit}, il peut être prévu que ce ne soit pas le cas, par exemple que ces deux parties soient différentes mais avec une sous-partie en commun (à titre d'exemple IDₗₒₜ et ID_{wafer} d'un côté, et ID_{wafer} et ID_{circuit} de l'autre côté).

Dans une variante de ces deux modes de réalisation, les étapes E2 et E2' consistent à envoyer, aussi bien au site de personnalisation 300 qu'au site de fabrication 200, la clé intermédiaire MSKL générée lors de l'étape E1'.

Dans ce cas, l'étape E4' consiste à enregistrer MSKL en mémoire des circuits intégrés 10ᵢ et les étapes E61' et E131" consistent à mettre en oeuvre uniquement la deuxième opération de diversification, dans notre exemple MSKDᵢ = SHA-256 ( ID_{circuit} ∥ MSKL).

Les **figures 6** et **7** s'appliquent également à ce deuxième mode de réalisation, si ce n'est que, dans l'état de la **figure 6**, la mémoire 12 comprend la clé intermédiaire MSKL en lieu et place de la clé racine MSK.

Une autre variante de l'invention consiste à ce que le fondeur 100 calcule lui-même les clés personnelles MSKDᵢ (étape E3) par diversification de la clé MSK ou de la clé intermédiaire MSKL selon qu'il a reçu l'une ou l'autre.

Dans ce cas, les étapes E3 à E14 de la **figure 3** s'appliquent en tenant compte de cette particularité de l'étape E3 et en mettant toutefois en oeuvre l'étape E136' et non l'étape E136: les numéros de série IDᵢ et les clés personnelles MSKDᵢ sont enregistrées dans les circuits intégrés à l'étape E4; il n'y a pas de génération de clé personnelle MSKDᵢ au sein de ces circuits intégrés.

Les exemples qui précèdent ne sont que des modes de réalisation de l'invention qui ne s'y limite pas.

Par exemple, bien qu'il soit fait mention de deux étapes S1 et S2 constitutives de la diversification de la clé racine MSK, un plus grand nombre d'étapes peut être prévu, générant plusieurs clés intermédiaires. Un tel cas peut par exemple servir, pour une société à laquelle on livre un lot de *wafers* (première étape de diversification à l'aide de IDₗₒₜ permettant de générer une clé intermédiaire pour la société) qui sont répartis sur plusieurs sites de personnalisation (deuxième étape de diversification à l'aide de ID_{wafer} permettant de générer une clé intermédiaire par site). Chaque site réalise alors l'authentification E13' ou E13" à l'aide de la clé intermédiaire reçue.

Notamment, la première diversification peut être réalisée dans le circuit intégré à réception du premier signal de mise sous tension (étape E6') et la deuxième diversification également dans le circuit intégré mais à réception du premier signal numérique (étape E13").

Par ailleurs, l'invention peut être mise en oeuvre dans des contextes d'utilisation différents du contexte de fabrication et de (pré)personnalisation des circuits intégrés comme décrit ci-dessus. A titre d'exemple, la clé racine peut être mémorisée dans la mémoire volatile lors de l'opération de personnalisation de la carte CP. Elle est ensuite diversifiée en une clé d'authentification personnelle dès la première utilisation chez un utilisateur (détection du premier signal issu d'un dispositif de lecture/écriture d'un utilisateur).

Par ailleurs, bien que les exemples de diversification évoqués ci-dessus mettent en oeuvre une opération de hachage type SHA-256, ces diversifications peuvent mettre en oeuvre des opérations cryptographiques à clés symétriques ou asymétriques (AES, DES), soit directement sur tout ou partie des numéros de série IDᵢ, soit sur le résultat de l'opération de hachage (dans ce cas on combine hachage et opération cryptographique).

## Revendications

1. Procédé de production d'un circuit intégré (10ᵢ), comprenant, au niveau d'un site de personnalisation (300) de circuits intégrés :
- la réception d'un circuit intégré depuis un site de fabrication ;
- une étape d'authentification (E13', E13"), par un dispositif d'accès et de personnalisation (320) du site de personnalisation, dudit circuit intégré reçu en utilisant une clé personnelle d'authentification (MSKDᵢ) propre audit circuit intégré et mémorisée dans ce circuit intégré, ladite clé personnelle d'authentification étant générée par diversification d'une clé racine (MSK),
- en cas d'authentification réussie, une étape de personnalisation du circuit intégré par le dispositif d'accès et de personnalisation du site de personnalisation, avec des données spécifiques audit circuit intégré; où :
- la génération par diversification de ladite clé racine (MSK) met en oeuvre au moins deux étapes (S1, S2) de diversification d'une clé, et
- ledit dispositif d'accès et de personnalisation (320) reçoit, d'un site central (100), une clé intermédiaire (MSKL) résultant de la première étape (S1) de diversification de la clé racine (MSK), clé intermédiaire sur la base de laquelle le dispositif d'accès et de personnalisation réalise l'étape d'authentification.

2. Procédé selon la revendication 1, dans lequel ledit dispositif d'accès et de personnalisation (320) met en oeuvre (E136') la deuxième étape (S2) de diversification sur ladite clé intermédiaire reçue (MSKL), de sorte à obtenir ladite clé personnelle d'authentification (MSKDᵢ) pour l'authentification (E13', E13") du circuit intégré (10ᵢ).

3. Procédé selon l'une des revendications précédentes, dans lequel la clé personnelle d'authentification (MSKDᵢ) est obtenue par diversification de la clé racine (MSK) à partir d'un numéro de série unique (IDᵢ) du circuit intégré (10ᵢ).

4. Procédé selon la revendication 3, dans lequel la première étape (S1) de diversification comprend une opération de diversification de ladite clé racine (MSK) à partir d'une première sous-partie (IDₗₒₜ, ID_{wafer}) du numéro de série unique (IDᵢ) du circuit intégré.

5. Procédé selon la revendication 4, dans lequel ladite première sous-partie (IDₗₒₜ, ID_{wafer}) du numéro de série unique (IDᵢ) est commune à une pluralité de circuits intégrés.

6. Procédé selon la revendication 4 ou 5, dans lequel la deuxième étape (S2) de diversification comprend une opération de diversification de ladite clé intermédiaire (MSKL) à partir d'une deuxième sous-partie (ID_{circuit}) du numéro de série unique (IDᵢ) du circuit intégré.

7. Procédé selon la revendication 6, dans lequel ladite deuxième sous-partie du numéro de série unique comprend une information d'identification (ID_{circuit}) du circuit intégré (10ᵢ) à l'intérieur de ladite pluralité de circuits intégrés identifiée par ladite première sous-partie (IDₗₒₜ, ID_{wafer}).

8. Procédé selon l'une des revendications 3 à 7, dans lequel le numéro de série unique du circuit intégré est mémorisé en mémoire non volatile du circuit intégré.

9. Procédé selon l'une des revendications 1 à 8, comprenant une étape de fabrication du circuit intégré (10ᵢ) au niveau du site de fabrication (200) et une étape de réception (E2), par ledit site de fabrication, de ladite clé racine (MSK) ou intermédiaire (MSKL) en provenance du site central (100), et
ladite fabrication comprend une étape d'enregistrement (E4') de ladite clé racine (MSK) ou intermédiaire (MSKL) dans une mémoire non volatile (12) dudit circuit intégré.

10. Procédé selon la revendication 9, comprenant une étape consistant à générer (E62', E132"), au sein du circuit intégré (10ᵢ) et en réponse à un premier signal (E61, E131) reçu par le circuit intégré, ladite clé personnelle d'authentification (MSKDᵢ) par diversification de la clé enregistrée (MSK, MSKL).

11. Procédé selon la revendication 10, comprenant, à réception dudit premier signal (E61, E131) par le circuit intégré (10ᵢ), une étape d'écriture (E64', E134"), dans une mémoire non volatile programmable qu'une seule fois (15), d'une information (150) indiquant qu'un premier signal a déjà été reçu.

12. Procédé selon la revendication 11, comprenant, à réception (E61, E131) d'un signal et préalablement au déclenchement de la génération (E62', E132") de ladite clé personnelle d'authentification (MSKDᵢ), une étape de détermination de la présence, en mémoire non volatile programmable qu'une seule fois (15), d'une information (150) indiquant qu'un premier signal a déjà été reçu.

13. Procédé selon l'une des revendications précédentes, dans lequel ladite diversification de la clé racine (MSK) met en oeuvre une fonction de hachage.

14. Procédé selon l'une des revendications précédentes, dans lequel ladite diversification de la clé racine (MSK) met en oeuvre une fonction cryptographique.

15. Procédé selon l'une des revendications précédentes, dans lequel ledit circuit intégré (10ᵢ) comprend, en mémoire, ladite clé personnelle d'authentification (MSKDᵢ), et ladite étape d'authentification (E13', E13") met en oeuvre un algorithme cryptographique à clé symétrique.

16. Système de production d'un circuit intégré (10ᵢ), comprenant un site de personnalisation (300) de circuits intégrés, ledit site de personnalisation comprenant des moyens pour recevoir un circuit intégré depuis un site de fabrication et un dispositif d'accès et de personnalisation (320) pourvu d'un module d'authentification dudit circuit intégré reçu en utilisant une clé personnelle d'authentification (MSKDᵢ) propre audit circuit intégré et mémorisé dans le circuit intégré, ladite clé personnelle d'authentification étant générée par diversification d'une clé racine (MSK), et pourvu d'un module de personnalisation pour personnaliser, en cas d'authentification réussie, le circuit intégré avec des données spécifiques audit circuit intégré, le système de production étant où :
- la génération par diversification de ladite clé racine (MSK) met en oeuvre au moins deux étapes (S1, S2) de diversification d'une clé, et
- le système comprend un site central (100) apte à générer une clé intermédiaire (MSKL) résultant de la première étape (S1) de diversification de la clé racine (MSK) et à transmettre ladite clé intermédiaire (MSKL) audit dispositif d'accès et de personnalisation (320), ce dernier étant configuré pour réaliser l'authentification du circuit intégré sur la base de ladite clé intermédiaire.

17. Système selon la revendication précédente, dans lequel ledit dispositif d'accès (300, 320) est configuré pour générer ladite clé personnelle d'authentification (MSKDᵢ) par application de la deuxième étape (S2) de diversification sur ladite clé intermédiaire reçue (MSKL).

## Patentansprüche

1. Verfahren zur Herstellung eines integrierten Schaltkreises (10ᵢ), welches an einem Personalisierungsort (300) für integrierte Schaltkreise umfasst:
- den Empfang eines integrierten Schaltkreises von einem Herstellungsort;
- einen Schritt der Authentifizierung (E13', E13"), durch eine Zugriffs- und Personalisierungsvorrichtung (320) des Personalisierungsortes, des empfangenen integrierten Schaltkreises unter Verwendung eines persönlichen Authentifizierungsschlüssels (MSKDᵢ), der dem integrierten Schaltkreis zugehörig ist und in diesem integrierten Schaltkreis gespeichert ist, wobei der persönliche Authentifizierungsschlüssel durch Diversifizierung eines Wurzelschlüssels (MSK) erzeugt wird,
- im Falle einer erfolgreichen Authentifizierung einen Schritt der Personalisierung des integrierten Schaltkreises durch die Zugriffs- und Personalisierungsvorrichtung des Personalisierungsortes mit Daten, die für den integrierten Schaltkreis spezifisch sind;
wobei
- die Erzeugung durch Diversifizierung des Wurzelschlüssels (MSK) in wenigstens zwei Schritten (S1, S2) der Diversifizierung eines Schlüssels durchgeführt wird, und
- die Zugriffs- und Personalisierungsvorrichtung (320) von einem zentralen Ort (100) einen Zwischenschlüssel (MSKL) empfängt, der aus dem ersten Schritt (S1) der Diversifizierung des Wurzelschlüssels (MSK) resultiert, wobei auf der Basis dieses Zwischenschlüssels die Zugriffs- und Personalisierungsvorrichtung den Authentifizierungsschritt durchführt.

2. Verfahren nach Anspruch 1, wobei die Zugriffs- und Personalisierungsvorrichtung (320) den zweiten Schritt (S2) der Diversifizierung an dem empfangenen Zwischenschlüssel (MSKL) durchführt (E136'), um so den persönlichen Authentifizierungsschlüssel (MSKDᵢ) für die Authentifizierung (E13', E13") des integrierten Schaltkreises (10ᵢ) zu erhalten.

3. Verfahren nach einem der vorhergehenden Ansprüche, wobei der persönliche Authentifizierungsschlüssel (MSKDᵢ) durch Diversifizierung des Wurzelschlüssels (MSK) mithilfe einer eindeutigen Seriennummer (IDᵢ) des integrierten Schaltkreises (10ᵢ) erhalten wird.

4. Verfahren nach Anspruch 3, wobei der erste Schritt (S1) der Diversifizierung einen Vorgang der Diversifizierung des Wurzelschlüssels (MSK) mithilfe eines ersten Teilabschnitts (IDₗₒₜ, ID_{wafer}) der eindeutigen Seriennummer (IDᵢ) des integrierten Schaltkreises umfasst.

5. Verfahren nach Anspruch 4, wobei der erste Teilabschnitt (IDₗₒₜ, ID_{wafer}) der eindeutigen Seriennummer (IDᵢ) mehreren integrierten Schaltkreisen gemeinsam ist.

6. Verfahren nach Anspruch 4 oder 5, wobei der zweite Schritt (S2) der Diversifizierung einen Vorgang der Diversifizierung des Zwischenschlüssels (MSKL) mithilfe eines zweiten Teilabschnitts (ID_{circuit}) der eindeutigen Seriennummer (IDᵢ) des integrierten Schaltkreises umfasst.

7. Verfahren nach Anspruch 6, wobei der zweite Teilabschnitt der eindeutigen Seriennummer eine Identifikationsinformation (ID_{circuit}) des integrierten Schaltkreises (10ᵢ) innerhalb der mehreren integrierten Schaltkreise, die durch den ersten Teilabschnitt (IDₗₒₜ, ID_{wafer}) identifiziert werden, umfasst.

8. Verfahren nach einem der Ansprüche 3 bis 7, wobei die eindeutige Seriennummer des integrierten Schaltkreises in einem nichtflüchtigen Speicher des integrierten Schaltkreises gespeichert wird.

9. Verfahren nach einem der Ansprüche 1 bis 8, welches einen Schritt der Herstellung des integrierten Schaltkreises (10ᵢ) am Herstellungsort (200) und einen Schritt des Empfangs (E2), durch den Herstellungsort, des Wurzelschlüssels (MSK) oder Zwischenschlüssels (MSKL) von dem zentralen Ort (100) umfasst, und
wobei die Herstellung einen Schritt der Speicherung (E4') des Wurzelschlüssels (MSK) oder Zwischenschlüssels (MSKL) in einem nichtflüchtigen Speicher (12) des integrierten Schaltkreises umfasst.

10. Verfahren nach Anspruch 9, welches einen Schritt umfasst, der darin besteht, innerhalb des integrierten Schaltkreises (10ᵢ) und in Reaktion auf ein erstes Signal (E61, E131), das durch den integrierten Schaltkreis empfangen wird, den persönlichen Authentifizierungsschlüssel (MSKDᵢ) durch Diversifizierung des gespeicherten Schlüssels (MSK, MSKL) zu erzeugen (E62', E132").

11. Verfahren nach Anspruch 10, welches beim Empfang des ersten Signals (E61, E131) durch den integrierten Schaltkreis (10ᵢ) einen Schritt des Schreibens (E64', E134") einer Information (150), die angibt, dass ein erstes Signal bereits empfangen wurde, in einen einmal programmierbaren Nur-Lese-Speicher (15) umfasst.

12. Verfahren nach Anspruch 11, welches beim Empfang (E61, E131) eines Signals und vor der Auslösung der Erzeugung (E62', E132") des persönlichen Authentifizierungsschlüssels (MSKDᵢ) einen Schritt der Bestimmung des Vorhandenseins einer Information (150), die angibt, dass ein erstes Signal bereits empfangen wurde, in einem einmal programmierbaren Nur-Lese-Speicher (15) umfasst.

13. Verfahren nach einem der vorhergehenden Ansprüche, wobei bei der Diversifizierung des Wurzelschlüssels (MSK) eine Hash-Funktion zur Anwendung kommt.

14. Verfahren nach einem der vorhergehenden Ansprüche, wobei bei der Diversifizierung des Wurzelschlüssels (MSK) eine kryptographische Funktion zur Anwendung kommt.

15. Verfahren nach einem der vorhergehenden Ansprüche, wobei der integrierte Schaltkreis (10ᵢ) im Speicher den persönlichen Authentifizierungsschlüssel (MSKDᵢ) umfasst und im Schritt der Authentifizierung (E13', E13") ein kryptographischer Algorithmus mit symmetrischem Schlüssel zur Anwendung kommt.

16. System zur Produktion eines integrierten Schaltkreises (10ᵢ), welches einen Personalisierungsort (300) für integrierte Schaltkreise umfasst, wobei der Personalisierungsort Mittel zum Empfang eines integrierten Schaltkreises von einem Herstellungsort und eine Zugriffs- und Personalisierungsvorrichtung (320) umfasst, die mit einem Modul zur Authentifizierung des empfangenen integrierten Schaltkreises unter Verwendung eines persönlichen Authentifizierungsschlüssels (MSKDᵢ), der dem integrierten Schaltkreis zugehörig ist und in dem integrierten Schaltkreis gespeichert ist, wobei der persönliche Authentifizierungsschlüssel durch Diversifizierung eines Wurzelschlüssels (MSK) erzeugt wird, versehen ist, und mit einem Personalisierungsmodul zum Personalisieren, im Falle einer erfolgreichen Authentifizierung, des integrierten Schaltkreises mit Daten, die für den integrierten Schaltkreis spezifisch sind, versehen ist, wobei das System zur Produktion so beschaffen ist, dass
- die Erzeugung durch Diversifizierung des Wurzelschlüssels (MSK) in wenigstens zwei Schritten (S1, S2) der Diversifizierung eines Schlüssels durchgeführt wird, und
- das System einen zentralen Ort (100) umfasst, der geeignet ist, einen Zwischenschlüssel (MSKL) zu erzeugen, der aus dem ersten Schritt (S1) der Diversifizierung des Wurzelschlüssels (MSK) resultiert, und diesen Zwischenschlüssel (MSKL) zu der Zugriffs- und Personalisierungsvorrichtung (320) zu übertragen, wobei diese Letztere dafür ausgebildet ist, die Authentifizierung des integrierten Schaltkreises auf der Basis des Zwischenschlüssels durchzuführen.

17. System nach dem vorhergehenden Anspruch, wobei die Zugriffsvorrichtung (300, 320) dafür ausgebildet ist, den persönlichen Authentifizierungsschlüssel (MSKDᵢ) durch Anwendung des zweiten Schrittes (S2) der Diversifizierung auf den empfangenen Zwischenschlüssel (MSKL) zu erzeugen.

## Claims

1. Method of production of an integrated circuit (10ᵢ), comprising, at an integrated circuit personalization site (300):
- the reception of an integrated circuit from a fabrication site,
- a step of authenticating (E13', E13"), by an access and personalization device (320) of the personalization site, said received integrated circuit by using a personal authentication key (MSKDᵢ) individual to said integrated circuit and stored in this integrated circuit, said personal authentication key being generated by diversification of a root key (MSK),
- in case of successful authentication, a step of personalizing the integrated circuit by the access and personalization device of the personalization site, with data specific to said integrated circuit;
where:
- the generation by diversifying said root key (MSK) implements at least two steps (S1, S2) of diversification of a key, and
- said access and personalization device (320) receives, from a central site (100), an intermediate key (MSKL) resulting from the first step (S1) of diversifying the root key (MSK), on the basis of which intermediate key the access and personalization device carries out the authentication step.

2. Method according to Claim 1, in which said access and personalization device (320) implements (E136') the second diversification step (S2) on said intermediate key received (MSKL), so as to obtain said personal authentication key (MSKDᵢ) for the authentication (E13', E13") of the integrated circuit (10ᵢ).

3. Method according to one of the preceding claims, in which the personal authentication key (MSKDᵢ) is obtained by diversifying the root key (MSK) from a unique serial number (IDᵢ) of the integrated circuit (10ᵢ).

4. Method according to Claim 3, in which the first diversification step (S1) comprises an operation of diversifying said root key (MSK) from a first sub-part (IDₗₒₜ, ID_{wafer}) of the unique serial number (IDᵢ) of the integrated circuit.

5. Method according to Claim 4, in which said first sub-part (IDₗₒₜ, ID_{wafer}) of the unique serial number (IDᵢ) is common to a plurality of integrated circuits.

6. Method according to Claim 4 or 5, in which the second diversification step (S2) comprises an operation of diversifying said intermediate key (MSKL) from a second sub-part (ID_{circuit}) of the unique serial number (IDᵢ) of the integrated circuit.

7. Method according to Claim 6, in which said second sub-part of the unique serial number comprises an information item (ID_{circuit}) identifying the integrated circuit (10ᵢ) within said plurality of integrated circuits which is identified by said first sub-part (ID_{lot,} ID_{wafer}).

8. Method according to one of Claims 3 to 7, in which the unique serial number of the integrated circuit is stored in nonvolatile memory of the integrated circuit.

9. Method according to one of Claims 1 to 8, comprising a step of fabricating the integrated circuit (10ᵢ) at the fabrication site (200) and a step (E2) of receiving, by said fabrication site, said root key (MSK) or intermediate key (MSKL) originating from the central site (100), and
said fabricating step comprises a step (E4') of recording said root key (MSK) or intermediate key (MSKL) in a nonvolatile memory (12) of said integrated circuit.

10. Method according to Claim 9, comprising a step consisting in generating (E62', E132"), within the integrated circuit (10ᵢ) and in response to a first signal (E61, E131) received by the integrated circuit, said personal authentication key (MSKDᵢ) by diversifying the recorded key (MSK, MSKL).

11. Method according to Claim 10, comprising, on receipt of said first signal (E61, E131) by the integrated circuit (10ᵢ), a step (E64', E134") of writing, in a one-time programmable nonvolatile memory (15), an item of information (150) indicating that a first signal has already been received.

12. Method according to Claim 11, comprising, on receipt (E61, E131) of a signal and prior to the triggering of the step of generating (E62', E132") said personal authentication key (MSKDᵢ), a step of determining the presence, in a one-time programmable nonvolatile memory (15), of an item of information (150) indicating that a first signal has already been received.

13. Method according to one of the preceding claims, in which said diversification of the root key (MSK) implements a hash function.

14. Method according to one of the preceding claims, in which said diversification of the root key (MSK) implements a cryptographic function.

15. Method according to one of the preceding claims, in which said integrated circuit (10ᵢ) comprises, in memory, said personal authentication key (MSKDᵢ), and said authentication step (E13', E13") implements a symmetric key cryptographic algorithm.

16. System for production of an integrated circuit (10ᵢ), comprising an integrated circuit personalization site (300), said personalization site comprising means for receiving an integrated circuit from a fabrication site and an access and personalization device (320) provided with a module for authenticating said received integrated circuit by using a personal authentication key (MSKDᵢ) individual to said integrated circuit and stored in the integrated circuit, said personal authentication key being generated by diversification of a root key (MSK), and provided with a personalization module for personalizing, in case of successful authentication, the integrated circuit with data specific to said integrated circuit, the production system being where:
- the generation by diversifying said root key (MSK) implements at least two steps (S1, S2) of diversification of a key, and
- the system comprises a central site (100) able to generate an intermediate key (MSKL) resulting from the first step (S1) of diversification of the root key (MSK) and to transmit said intermediate key (MSKL) to said access and personalization device (320), the latter being configured to carry out the authentication of the integrated circuit on the basis of said intermediate key.

17. System according to the preceding claim, in which said access device (300, 320) is configured to generate said personal authentication key (MSKDᵢ) by applying the second diversification step (S2) to said intermediate key received (MSKL).
